# FASCICULE DE BREVET EUROPEEN

(11) **EP 1 285 805 B1**
(45) Date de publication et mention de la délivrance du brevet: **02.11.2005**
(21) Numéro de dépôt: 02078442.7
(22) Date de dépôt: 08.08.2002
(51) Int. Cl.: B60K 15/035

(54) **Ensemble multifonction d'un système à carburant, réservoir comprenant ledit ensemble et procédé de fabrication dudit système**
Multifunktionseinheit in einem Kraftstoffsystem, Tank mit einer solchen Einheit und Verfahren zur Herstellung des Systems
Multifunctional assembly for fuel system, tank with such an assembly and method of making the system

(30) Priorité: 13.08.2001 FR 0110783
(43) Date de publication de la demande: 26.02.2003
(73) Titulaire: Inergy Automotive Systems Research (SA), 1120 Bruxelles (BE)
(72) Inventeur: Georis, Philippe, 60350 Pierrefonds (FR); Rosseel, Alexis, 60200 Compiegne (FR); Baudoux, Patrice, 02520 Flavy le Martel (FR)
(74) Mandataire: Decamps, Alain René François

(56) Documents cités:
- WO-A-99/42316
- BE-A- 1 012 697
- FR-A- 2 771 683
- US-A- 4 852 761
- US-A- 4 919 103

## Description

La présente invention a pour objet un ensemble multifonction comportant au moins deux éléments d'un système à carburant, destiné à être fixé sur l'enveloppe d'un réservoir à carburant, ces éléments exerçant des fonctions distinctes au sein du système à carburant, l'un des éléments pouvant être constitué par un canister et l'autre élément par un dispositif réalisant au moins l'une des fonctions ROV, ISR, SLV, SPD, ORVR ou OBD.

De façon bien connue, la fonction ROV (Roll Over Valve) correspond à la fermeture du circuit de mise à l'air du réservoir en cas de retournement du véhicule. La fonction ISR (Interdiction de Sur-Remplissage) permet d'interdire le remplissage en excès du réservoir, afin de maintenir au-dessus du carburant liquide une poche gazeuse apte à absorber les dilatations du carburant dans le réservoir. La fonction SLV (Séparation Liquide Vapeur) vise à éviter que des gouttelettes de carburant ne pénètrent dans le circuit de mise à l'air pendant le roulage, ce qui sinon risquerait de saturer la matière active contenue dans le canister. La fonction SPD (Sécurité Pression Dépression) permet le maintien de la pression dans le réservoir entre des valeurs maximum et minimum préétablies. La fonction ORVR (On Board Refueling Vapor Recovery) permet de retenir les vapeurs de carburant émises par le réservoir lorsque l'on procède au remplissage de celui-ci. La fonction OBD (On Board Diagnostic) permet, en délivrant par exemple un signal représentatif de la pression, de vérifier l'étanchéité du réservoir pendant l'utilisation.

On connaît par la demande de brevet français FR-2 771 683 et par la demande internationale WO 99/42316 des réservoirs à carburant dont les enveloppes présentent chacune un logement débouchant à l'extérieur du réservoir, pour recevoir une matière active telle que du charbon actif, apte à adsorber les vapeurs de carburant et former un canister intégré. La réalisation de l'enveloppe avec un tel logement et le remplissage de ce dernier sont relativement complexes, de sorte que des canisters rapportés continuent à être fréquemment utilisés, ces canisters intégrant parfois un ou plusieurs clapets afin de constituer des ensembles multifonction.

Le brevet BE 1 012 697 divulgue un réservoir à carburant comportant un ensemble multifonction selon le préambule de la revendication 1 ainsi qu'un procédé de fabrication selon le préambule de la revendication 18.

On connaît ainsi par le brevet belge BE 1 012 697 un réservoir à carburant comportant un ensemble multifonction pouvant être constitué d'un canister et de clapets intégrés, cet ensemble étant mis en place au travers d'une ouverture de l'enveloppe du réservoir. Dans un tel ensemble, les clapets sont incorporés au canister, ce dernier ayant une forme généralement annulaire. La réalisation d'un tel l'ensemble multifonction impose de maîtriser à la fois les technologies de fabrication des clapets et les technologies de fabrication des canisters, ce qui est susceptible de soulever des difficultés en cas d'appel à la sous-traitance.

On connaît, par ailleurs, par le brevet US 4,852,761 un réservoir comportant un ensemble multifonction constitué d'un canister et d'un clapet intégré, dont la réalisation est relativement complexe.

La présente invention vise notamment à simplifier la fabrication des systèmes à carburant et des réservoirs à carburant équipés de tels systèmes.

Elle y parvient grâce à un nouvel ensemble multifonction selon la revendication 1.

L'invention rend plus facile le recours à des sous-traitants pour fabriquer l'ensemble multifonction, car le ou les clapets de l'ensemble multifonction (lorsque celui-ci en comporte) peuvent être réalisés par un sous-traitant maîtrisant la technologie correspondante et le canister (lorsque l'ensemble multifonction en comporte un) par un autre sous-traitant. De plus, l'invention permet d'utiliser, pour fabriquer l'ensemble multifonction, des parties fonctionnelles standards dont la fiabilité a été éprouvée et reconnue par les constructeurs automobiles, susceptibles d'être produites à un coût relativement faible grâce aux économies d'échelles, auxquelles ne sont apportées que des modifications relativement mineures pour réaliser les première et deuxième parties de connexion.

L'ensemble multifonction selon l'invention permet ainsi de bénéficier des avantages des ensembles multifonction intégrés connus, notamment la facilité de pose liée à la diminution du nombre de pièces à manipuler.

Les deux éléments sont avantageusement agencés de manière à disposer de leurs fonctionnalités propres avant leur assemblage, permettant notamment de les développer, valider et tester indépendamment l'un de l'autre.

Selon l'invention, l'un des éléments de l'ensemble multifonction est constitué par un canister et l'autre élément par un dispositif réalisant au moins l'une des fonctions ROV, ISR, SLV, SPD, ORVR ou OBD, par exemple à la fois les fonctions ISR et ROV, auquel cas ce dispositif comporte par exemple un flotteur coulissant verticalement, un ressort et une bille, de façon connue.

Les parties de connexion précitées peuvent s'étendre au moins partiellement à l'extérieur de l'enveloppe du réservoir, voire complètement à l'extérieur de cette dernière, et les parties fonctionnelles de chacun des deux éléments de l'ensemble multifonction peuvent s'étendre à l'intérieur du réservoir, après la fixation de l'ensemble multifonction sur l'enveloppe du réservoir.

Dans une mise en oeuvre particulière de l'invention, les parties de connexion sont agencées de manière à remplir une fonction autre que le simple maintien mécanique des deux éléments. Les parties de connexion peuvent ainsi avantageusement définir au moins un conduit permettant aux deux éléments de communiquer, afin par exemple de permettre aux vapeurs de carburant de circuler de l'un des éléments vers l'autre. L'ensemble multifonction peut alors être dépourvu de tubulure rapportée entre les deux éléments. Les parties de connexion peuvent comporter chacune une portion de conduit, ces portions étant par exemple aptes à venir en appui l'une contre l'autre, à leurs extrémités, de manière à définir le conduit précité. Dans un exemple de mise en oeuvre, l'un au moins des éléments comporte une platine en partie supérieure, cette platine étant par exemple généralement plane, et la portion de conduit de cet élément se raccorde à cette platine par un voile de matière. Chaque portion de conduit peut comporter au moins une nervure de rigidification s'étendant sur sa longueur, par exemple trois nervures de rigidification.

Dans une mise en oeuvre particulière de l'invention, les parties de connexion présentent chacune une surface d'assemblage, apte à venir en contact avec la surface d'assemblage correspondante de l'autre élément. Selon l'invention, l'un des éléments comporte un premier relief apte à coopérer, par complémentarité de formes, avec un deuxième relief de l'autre élément. Le premier relief peut comporter au moins une patte et le deuxième relief au moins un logement dans lequel cette patte peut coulisser. Ce logement peut présenter une section intérieure rectangulaire et la patte une section transversale en U. Dans un exemple de réalisation, l'un des éléments comporte deux pattes disposées parallèlement à la portion de conduit de cet élément, de part et d'autre de cette dernière, et l'autre élément comporte deux logements correspondants s'étendant parallèlement à la portion de conduit de cet autre élément, de part et d'autre de celle-ci. Ainsi, avant d'assembler les deux éléments par soudage par exemple, on peut aisément les maintenir immobiles l'un par rapport à l'autre dans une position prédéterminée, en introduisant les pattes dans les logements correspondants.

L'un au moins des éléments de l'ensemble multifonction peut comporter une surface destinée au soudage de cet élément sur l'enveloppe du réservoir, cette surface pouvant être définie par un rebord, par exemple.

Les deux éléments de l'ensemble multifonction peuvent être introduits dans une ouverture unique de l'enveloppe du réservoir ou en variante dans deux ouvertures respectives séparées.

L'invention a encore pour objet un réservoir à carburant, comportant un ensemble multifonction tel que défini plus haut.

L'invention a encore pour objet un procédé de fabrication d'un réservoir à carburant selon la revendication 18.

L'assemblage du canister avec le dispositif qui réalise au moins l'une des fonctions ROV, ISR, SLV, SPD, ORVR ou OBD est s'effectué suivant une première direction qui est perpendiculaire à une deuxième direction. L'ensemble multifonction peut être introduit dans l'enveloppe du réservoir selon la deuxième direction.

Dans une mise en oeuvre particulière de l'invention, on fixe directement l'ensemble multifonction sur l'enveloppe du réservoir, sans utiliser de couvercle intermédiaire, ce qui simplifie la fabrication du réservoir et tend à diminuer les risques de pertes de carburant par diffusion à travers les zones d'assemblage. Toutefois, on né sort pas du cadre de la présente invention lorsque l'ensemble multifonction est fixé sur un couvercle, lequel peut contribuer à l'assemblage des éléments, couvercle ensuite fixé sur l'enveloppe du réservoir.

L'invention sera mieux comprise à la lecture de la description détaillée qui va suivre, d'un exemple de mise en oeuvre, non limitatif, et à l'examen du dessin annexé (qui fait partie intégrante de la description), sur lequel :
- la figure 1 est une vue schématique et partielle, en perspective, avant assemblage, d'un clapet et d'un canister destinés à former un ensemble multifonction conforme à l'invention,
- la figure 2 est une vue analogue à la figure 1, le clapet et le canister étant assemblés, et
- la figure 3 est une vue schématique, en coupe axiale suivant III-III, de l'ensemble multifonction de la figure 2.

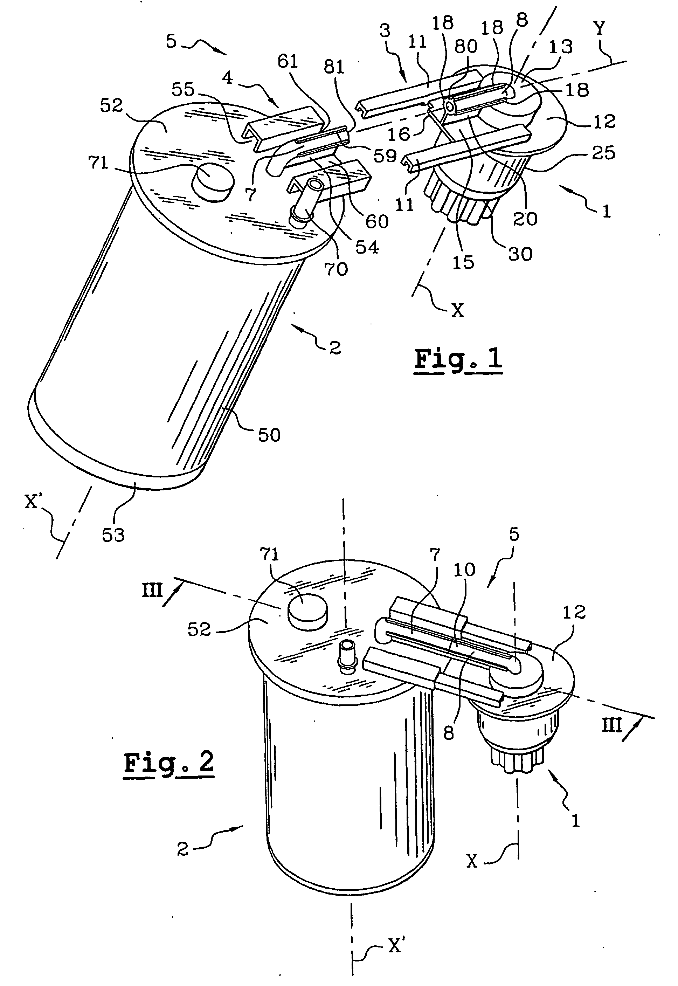

On a représenté sur la figure 1 un clapet 1 et un canister 2 à assembler pour former un ensemble multifonction 5 conforme à l'invention, destiné à être fixé sur une enveloppe de réservoir à carburant, non représentée.

Le clapet 1 et le canister 2 comportent des parties fonctionnelles conventionnelles et se distinguent essentiellement d'un clapet et d'un canister connus par le fait qu'ils comportent des première 3 et deuxième 4 parties de connexion respectives, destinées à permettre leur assemblage indépendamment de l'enveloppe du réservoir.

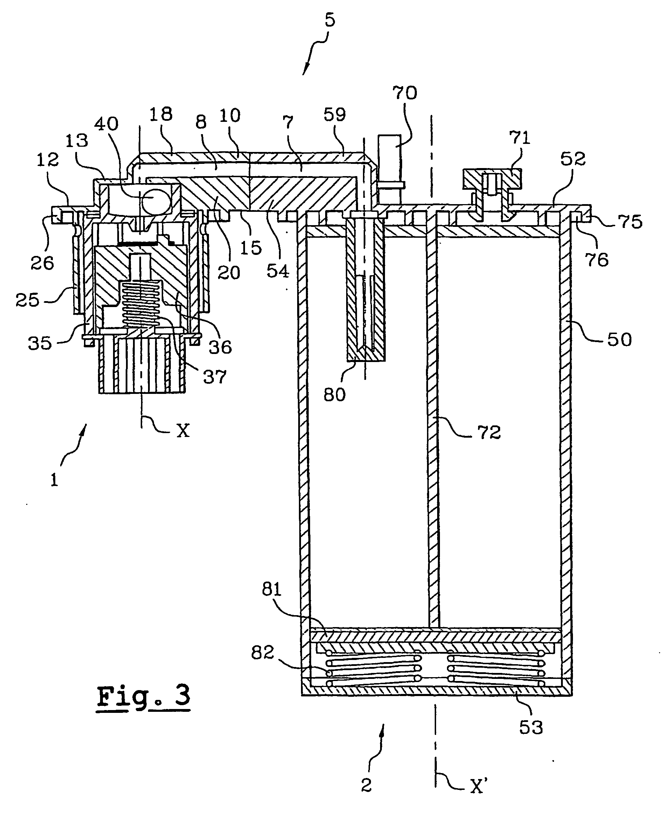

La première partie de connexion 3 du clapet 1 et la deuxième partie de connexion 4 du canister 2 comportent des portions de conduit respectives 7 et 8. Ces dernières sont conformées pour venir en appui l'une contre l'autre, à leurs extrémités, de manière à former un conduit 10 permettant au clapet 1 de communiquer avec le canister 2, comme on peut le voir sur la figure 3, notamment. Dans l'exemple décrit, cette communication s'effectue à l'extérieur de l'enveloppe du réservoir, comme cela sera précisé dans la suite.

La première partie de connexion 3 est réalisée d'un seul tenant par moulage de matière plastique avec une jupe tubulaire 25, d'axe X, et comporte deux pattes 11 s'étendant parallèlement à l'axe Y de la portion de conduit 8, de part et d'autre de celle-ci.

Les pattes 11 présentent une section transversale en U, ouverte vers le bas, comme on le voit sur la figure 1, et se raccordent à la face supérieure d'une platine 12 qui s'étend généralement perpendiculairement à l'axe X.

La jupe tubulaire 25 se raccorde à la face inférieure de cette platine 12.

Le clapet 1 comporte, sur la face supérieure de la platine 12, un bossage cylindrique 13 définissant un logement pour une bille métallique 40, dont la fonction sera précisée plus loin. La portion de conduit 8 communique avec l'intérieur de ce logement par un orifice réalisé dans la paroi supérieure du bossage 13, comme on peut le voir sur la figure 3.

La platine 12 présente, entre les pattes 11, une avancée 15 présentant un bord libre 16 s'étendant généralement perpendiculairement aux axes X et Y. La portion de conduit 8 est reliée à cette avancée 15 par un voile de matière 20, parallèle à l'axe Y.

On peut voir sur la figure 1 que la portion de conduit 8 est rigidifiée par trois nervures 18 s'étendant sur toute sa longueur.

La jupe tubulaire 25 définit un logement cylindrique ouvert vers le bas, permettant de recevoir différentes pièces constitutives du clapet 1, notamment un corps 35 agencé pour guider en coulissement vertical un flotteur 36 reposant sur un ressort 37. Ce flotteur 36 est apte, d'une part, à flotter sur une vague de carburant pour fermer le clapet 1 et empêcher du carburant liquide provenant de cette vague d'atteindre le canister et, d'autre part, à fermer le clapet en cas de retournement du véhicule. Il assure par conséquent les fonctions SLV et ROV.

Le fond du logement dans lequel est retenu la bille 40 est conique, de sorte que lorsque le véhicule repose sur une surface plane à l'arrêt, la bille 40 ferme sensiblement la communication entre l'intérieur du réservoir et la portion de conduit 8. La bille 40 permet donc d'assurer la fonction ISR.

La platine 12 présente un rebord circulaire 26, dirigé vers le bas, qui permet le soudage du clapet 1 sur la surface extérieure de l'enveloppe du réservoir.

La deuxième partie de fixation 4, appartenant au canister 2, est réalisée dans l'exemple décrit d'un seul tenant avec une enveloppe tubulaire 50 de ce dernier, cylindrique de révolution autour d'un axe X' parallèle à l'axe X. L'enveloppe 50 est fermée à sa partie supérieure par une platine 52, généralement perpendiculaire à l'axe X' et à sa partie inférieure par un fond 53, rapporté, la platine 52 étant réalisée d'un seul tenant avec l'enveloppe 50.

La deuxième partie de fixation 4 comporte, comme on le voit sur la figure 1, outre la portion de conduit 7 d'axe Y, deux logements 55 disposés parallèlement à cette portion de conduit 7, de part et d'autre de celle-ci. Ces logements 55 présentent une section transversale intérieure rectangulaire, adaptée à celle des pattes 11, étant destinées à recevoir ces dernières, lesquelles peuvent coulisser à l'intérieur des logements 55 parallèlement à l'axe Y lorsque le clapet 1 et le canister 2 sont rapprochés pour être assemblés.

La portion de conduit 7 se raccorde par un voile de matière 54 à une avancée 60 de la platine 52, s'étendant entre les logements 55 et présentant un bord libre 61 généralement perpendiculaire à l'axe Y. Ce bord 61 est agencé pour venir au contact du bord 16 correspondant du clapet 1 lorsque les pattes 11 sont complètement enfoncées dans les logements 55. La portion de conduit 7 est renforcée par trois nervures de rigidification 59, qui sont destinées à venir dans le prolongement des nervures 18.

Le canister 2 comporte, de manière connue en soi, sur la platine 52 un embout extérieur 70 permettant de relier le canister à un circuit de désorption et une soupape de reprise d'air 71. Une cloison intérieure 72 définit deux compartiments contenant la matière active, non représentée, et permet d'allonger le parcours des vapeurs de carburant au sein du canister 2. Ce dernier comporte un filtre 80 pour limiter le risque de retour de particules de matière active dans le réservoir et vers la ligne de purge du moteur, et un fond mobile 81 rappelé par un ressort 82.

La platine 52 comporte un rebord 75 autour de l'enveloppe 50, afin de souder le canister 2 sur la surface extérieure de l'enveloppe du réservoir.

Comme on peut le voir sur les figures 2 et 3, le diamètre extérieur de l'enveloppe 50 est inférieur à la distance entre les axes X et X'. Ainsi, le clapet 1, après assemblage avec le canister 2, n'est pas entouré par le canister 2.

L'assemblage du clapet 1 avec le canister 2.s'effectue de la manière suivante.

D'abord, on introduit les pattes 11 du clapet 1 dans les logements 55 du canister 2, par un mouvement de coulissement suivant l'axe Y. Au terme de ce mouvement, les extrémités des portions de conduit 7 et 8, des nervures de rigidifications 18 et 55, des voiles de matière 20 et 54, et les bords des avancées 16 et 60 viennent mutuellement en appui. Ces surfaces en contact des deux éléments peuvent alors être soudées.

L'ensemble 5 ainsi obtenu est ensuite mis en place sur l'enveloppe du réservoir en étant introduit à travers deux orifices de celle-ci, suivant une direction parallèle aux axes X et X'. Les rebords 26 et 75 viennent en appui sur la surface extérieure de l'enveloppe, et peuvent être soudés à cette dernière.

Bien entendu, l'invention n'est pas limitée à l'exemple de mise en oeuvre qui vient d'être décrit.

On peut notamment utiliser tout autre type de clapet ou de canister.

On peut encore prévoir sur les deux éléments de l'ensemble multifonction des reliefs aptes à coopérer par encliquetage, de manière à les maintenir dans une position relative prédéfinie, avant leur assemblage définitif, par soudure par exemple.

Les parties de connexion des deux éléments peuvent encore ne comporter que des portions de conduit 11, agencées de telle sorte que leur fixation assure à elle seule le maintien des deux éléments.

## Revendications

1. Ensemble multifonction (1) comportant deux éléments (1, 2) d'un système à carburant, destiné à être fixé sur l'enveloppe d'un réservoir à carburant, ces éléments exerçant des fonctions distinctes au sein du système à carburant, l'un des éléments étant constitué par un canister (2) et l'autre élément par un dispositif (1) assurant au moins l'une des fonctions ROV, ISR, SLV, SPD, ORVR ou OBD, les deux éléments (1, 2) comportant des première (3) et deuxième (4) parties de connexion respectives permettant leur assemblage indépendamment de l'enveloppe du réservoir et sans intégration d'un élément dans l'autre, l'ensemble multifonction étant **caractérisé par le fait que** :
- l'un des éléments comporte au moins un premier relief (11) apte à coopérer par complémentarité de formes avec un deuxième relief (55) de l'autre élément ;
- lesdits premier et deuxième reliefs sont aptes à s'assembler suivant une direction (Y) et au moins un des éléments comporte un corps d'axe (X, X') perpendiculaire à cette direction ; et
- les éléments (1, 2) sont assemblés à l'aide desdits reliefs (11, 55) de manière à ce que l'un des éléments n'entoure pas l'autre.

2. Ensemble selon la revendication précédente, **caractérisé par le fait que** ledit dispositif (1) assure au moins les fonctions ISR et ROV.

3. Ensemble selon la revendication précédente, **caractérisé par le fait que** ledit dispositif (I) comporte un flotteur (36), une bille (40) et un ressort (37).

4. Ensemble selon l'une quelconque des revendications précédentes, **caractérisé par le fait que** les parties de connexion (3, 4) s'étendent au moins partiellement à l'extérieur de l'enveloppe du réservoir.

5. Ensemble selon l'une quelconque des revendications précédentes, **caractérisé par le fait que** les parties de connexion (3, 4) sont agencées de manière à remplir une fonction supplémentaire autre que le simple maintien mécanique des deux éléments.

6. Ensemble selon la revendication précédente, **caractérisé par le fait que** les parties de connexion définissent un conduit (10) permettant une circulation des vapeurs de carburant de l'un des éléments vers l'autre.

7. Ensemble selon la revendication précédente, **caractérisé par le fait que** les première et deuxième parties de connexion comportent chacune une portion de conduit (7, 8), ces portions étant aptes à venir en appui l'une contre l'autre, à leurs extrémités.

8. Ensemble selon la revendication précédente, **caractérisé par le fait que** l'un au moins des éléments (1, 2) comporte une platine en partie supérieure, cette platine étant de préférence généralement plane, et **par le fait que** la portion de conduit correspondante se raccorde à cette platine par un voile de matière (20, 54).

9. Ensemble selon l'une des deux revendications immédiatement précédentes, **caractérisé par le fait que** chaque portion de conduit (7, 8) comporte au moins une nervure de rigidification (18, 59) s'étendant le long de celle-ci.

10. Ensemble selon l'une quelconque des revendications précédentes, **caractérisé par le fait que** les première et deuxième parties de connexion (3, 4) présentent chacune une surface d'assemblage apte à venir en contact avec la surface d'assemblage de l'autre élément.

11. Ensemble selon l'une quelconque des revendications précédentes, **caractérisé par le fait que** le premier relief comporte une patte (11) et le deuxième relief un logement (55) dans lequel cette patte peut coulisser.

12. Ensemble selon la revendication précédente, **caractérisé par le fait que** ledit logement (55) présente une section intérieure rectangulaire et la patte (11) une section transversale en U.

13. Ensemble selon la revendication précédente et la revendication 7, **caractérisé par le fait que** l'un des éléments comporte deux pattes (11) disposées parallèlement à la portion de conduit (8) de cet élément, de part et d'autre de celle-ci et l'autre élément deux logements (55) s'étendant parallèlement à la portion de conduit correspondante, de part et d'autre de celle-ci.

14. Ensemble selon l'une quelconque des revendications précédentes, **caractérisé par le fait que** l'un au moins des éléments présente une surface destinée au soudage de cet élément sur l'enveloppe du réservoir.

15. Ensemble selon la revendication précédente, **caractérisé par le fait que** ladite surface est définie par l'extrémité d'un rebord (26, 75) de l'élément correspondant.

16. Réservoir à carburant comportant un ensemble multifonction tel que défini dans l'une quelconque des revendications précédentes.

17. Réservoir selon la revendication précédente, **caractérisé par le fait que** l'enveloppe du réservoir comporte un orifice propre à chaque élément, permettant d'introduire au moins partiellement cet élément à l'intérieur du réservoir.

18. Procédé de fabrication d'un système à carburant de véhicule automobile comportant un réservoir à carburant, ledit procédé comprenant les étapes suivantes :
- assembler deux éléments du système à carburant, notamment par soudage, l'un des éléments étant constitué par un canister (2) et l'autre élément par un dispositif (1) réalisant au moins l'une des fonctions ROV, ISR, SLV, SPD, ORVR ou OBD, les deux éléments comportant des parties de connexion permettant leur assemblage indépendamment de l'enveloppe du réservoir et sans intégration d'un élément dans l'autre,
- fixer l'ensemble ainsi obtenu sur l'enveloppe du réservoir, notamment par soudage,
- ledit procédé étant **caractérisé en ce que** :
- l'un des éléments comporte au moins un premier relief (11) apte à coopérer par complémentarité de formes avec un deuxième relief (55) de l'autre élément, lesdits reliefs étant aptes à s'assembler suivant une direction (Y) et au moins un des éléments comportant un corps d'axe (X, X') perpendiculaire à cette direction ; et
- les éléments sont assemblés suivant la direction (Y) à l'aide desdits reliefs (11, 55) de manière à ce que l'un des éléments n'entoure pas l'autre.

19. Procédé selon la revendication précédente, **caractérisé par le fait que** l'on introduit l'ensemble dans l'enveloppe du réservoir suivant une direction parallèle à l'axe (X, X')et donc perpendiculaire à la direction d'asseinblage (Y).

20. Procédé selon l'une des revendications 18 ou 19, **caractérisé par le fait que** l'on fixe directement l'ensemble multifonction (5) sur l'enveloppe du réservoir, sans l'intermédiaire d'un couvercle.

## Patentansprüche

1. Multifunktionseinheit (1) mit zwei Elementen (1, 2) eines Kraftstoffsystems, die zur Befestigung am Gehäuse eines Kraftstoffbehälters bestimmt ist, wobei die Elemente im Inneren des Kraftstoffsystems unterschiedliche Funktionen ausüben, wobei eines der Elemente durch einen Kanister (2) und das andere Element durch eine Vorrichtung (1) gebildet ist, die zumindest eine der Funktionen ROV, ISR, SLV, SPD, ORVR oder OBD gewährleistet, wobei die beiden Elemente (1, 2) einen ersten Verbindungsteil (3) und einen zweiten Verbindungsteil (4) aufweisen, die ihren Zusammenbau unabhängig von dem Behältergehäuse und ohne Integration eines Elementes in das andere ermöglichen, wobei die Multifunktionseinheit **dadurch gekennzeichnet ist, daß** :
- eines der Elemente zumindest ein erstes Relief (11) umfaßt, das komplementär mit einem zweiten Relief (55) des anderen Elementes zusammenwirkt;
- wobei das erste und das zweite Relief so ausgebildet sind, daß die Reliefs in einer Richtung (Y) zusammengebaut werden können und zumindest eines der Elemente einen Körper mit einer Achse (X, X') senkrecht zu dieser Richtung aufweist; und
- wobei die Elemente (1, 2) mit Hilfe dieser Reliefs (11, 55) derart zusammengebaut werden, daß das eine Element das andere Element nicht umgibt.

2. Einheit nach Anspruch 1, **dadurch gekennzeichnet, daß** die Vorrichtung (1) zumindest die Funktionen ISR und ROV gewährleistet.

3. Einheit nach dem vorhergehenden Anspruch, **dadurch gekennzeichnet, daß** die Vorrichtung (1) einen Schwimmer (36), eine Kugel (40) und eine Feder (37) aufweist.

4. Einheit nach einem der vorhergehenden Ansprüche, **dadurch gekennzeichnet, daß** sich die Verbindungsteile (3, 4) zumindest teilweise an der Außenseite dem Behältergehäuse erstrecken.

5. Einheit nach einem der vorhergehenden Ansprüche, **dadurch gekennzeichnet, daß** die Verbindungsteile (3, 4) derart ausgebildet sind, daß sie außer dem einfachen mechanischen Verbinden der beiden Elemente eine zusätzliche Funktion ausführen.

6. Einheit nach dem vorhergehenden Anspruch, **dadurch gekennzeichnet, daß** die Verbindungsteile eine Leitung (10) definieren, die eine Zirkulation der Kraftstoffdämpfe von einem Element zum anderen gestattet.

7. Einheit nach dem vorhergehenden Anspruch, **dadurch gekennzeichnet, daß** der erste und der zweite Verbindungsteil jeweils einen Leitungsteil (7, 8) aufweisen, wobei die Teile mit ihren Enden aneinander in Anlage versetzbar sind.

8. Einheit nach dem vorhergehenden Anspruch, **dadurch gekennzeichnet, daß** zumindest eines der Elemente (1, 2) an seinem oberen Teil eine Platine aufweist, wobei diese Platine vorzugsweise im allgemeinen ebenflächig ist, und **dadurch**, daß der entsprechende Leitungsteil an diese Platine durch eine Materialschicht (20, 54) anschließt.

9. Einheit nach einem der beiden unmittelbar vorhergehenden Ansprüche, **dadurch gekennzeichnet, daß** jeder Leitungsteil (7, 8) zumindest eine Versteifungsrippe (18, 59) aufweist, die sich entlang des Teiles erstreckt.

10. Einheit nach einem der vorhergehenden Ansprüche, **dadurch gekennzeichnet, daß** der erste und der zweite Verbindungsteil (3, 4) jeweils eine Zusammenbaufläche aufweisen, die je mit der Zusammenbaufläche des anderen Elementes in Kontakt versetzbar sind.

11. Einheit nach einem der vorhergehenden Ansprüche, **dadurch gekennzeichnet, daß** das erste Relief einen Vorsprung (11) und das zweite Relief einen Sitz (55) aufweist, in welchem dieser Vorsprung gleiten kann.

12. Einheit nach dem vorhergehenden Anspruch, **dadurch gekennzeichnet, daß** der Sitz (55) einen rechteckigen Innenabschnitt und der Vorsprung (11) einen U-förmigen Querschnitt aufweist.

13. Einheit nach dem vorhergehenden Anspruch und dem Anspruch 7, **dadurch gekennzeichnet, daß** eines der Elemente zwei Vorsprünge (11) aufweist, die parallel zu dem Leitungsteil (8) dieses Elementes zu beiden Seiten desselben verlaufen, und das andere Element zwei Sitze (55) aufweist, die sich parallel zu dem entsprechenden Leitungsteil zu beiden Seiten desselben erstrecken.

14. Einheit nach einem der vorhergehenden Ansprüche, **dadurch gekennzeichnet, daß** zumindest eines der Elemente eine Fläche aufweist, die dazu bestimmt ist, dieses Element an dem Behältergehäuse anzuschweißen.

15. Einheit nach dem vorhergehenden Anspruch, **dadurch gekennzeichnet, daß** diese Oberfläche durch einen Rand (26, 75) des entsprechenden Elementes definiert ist

16. Kraftstoffbehälter mit einer Multifunktionseinheit, wie sie in einem der vorhergehenden Ansprüche beschrieben ist

17. Behälter nach dem vorhergehenden Anspruch, **dadurch gekennzeichnet, daß** das Behältergehäuse für jedes Element eine entsprechende Öffnung aufweist, die es gestattet, das Element zumindest teilweise in das Innere des Behälters einzuführen.

18. Verfahren zum Herstellen eines Kraftstoffsystems für ein Automobilfahrzeug mit einem Kraftstoffbehälter, wobei das Verfahren die folgenden Schritte umfaßt :
- Zusammenbauen zweier Elemente des Kraftstoffsystems, insbesondere durch Schweißen, wobei eines der Elemente durch einen Kanister (2) und das andere Element durch eine Vorrichtung (1) gebildet ist, welche zumindest eine der Funktionen ROV, ISR, SLV, SPD, ORVR oder OBD erfüllt, wobei die beiden Elemente Verbindungsteile aufweisen, die ihren Zusammenbau unabhängig von dem Behältergehäuse und ohne Integration eines der Elemente in das andere ermöglichen,
- Befestigen der auf diese Weise erhaltenen Einheit an dem Behältergehäuse, insbesondere durch Schweißen,
- wobei das Verfahren **dadurch gekennzeichnet ist, daß** :
- eines der Elemente durch zumindest ein erstes Relief (11) umfaßt, das komplementär mit einem zweiten Relief (55) des anderen Elementes zusammenwirkt, wobei die Reliefs in einer Richtung (Y) miteinander verbunden werden und zumindest eines der Elemente eine Körperachse (X, X') aufweist, die senkrecht zu dieser Richtung verläuft; und
- die Elemente gemäß der Richtung (Y) mit Hilfe dieser Reliefs (11, 65) derart zusammengebaut werden, daß das eine Element das andere Element nicht umgibt.

19. Verfahren nach dem vorhergehenden Anspruch, **dadurch gekennzeichnet, daß** man die Einheit in das Behältergehäuse gemäß einer Richtung parallel zur Achse (X, X') und somit senkrecht zur Zusammenbaurichtung (Y) einführt.

20. Verfahren nach einem der Ansprüche 18 oder 19, **dadurch gekennzeichnet, daß** man die Multifunktionseinheit (5) direkt an dem Gehäuse des Kraftstoffbehälters ohne Zuhilfenahme eines Deckels befestigt.

## Claims

1. Multi-functional assembly (1) comprising two elements (1, 2) of a fuel - system, which is intended to be fixed on the casing of a fuel tank, these elements performing distinct functions within the fuel system, one of the elements consisting of a canister (2) and the other element consisting of a device (1) performing at least one of the ROV, ISR, SLV, SPD, ORVR or OBD functions, the two elements (1, 2) comprising first (3) and second (4) respective connection parts allowing them to be assembled independently of the casing of the tank and without building one element into the other, the multi-functional assembly being **characterized in that** :
- one of the elements comprises at least a first relief (11) able to collaborate through complementing shapes with a second relief (55) belonging to the other element;
- the said first and second reliefs are able to be assembled in a direction (Y) and at least one of the elements comprises a body of axis (X, X') perpendicular to this direction; and
- the elements (1, 2) are assembled with the aid of the said reliefs (11, 55) in such a way that one of the elements does not surround the other.

2. Assembly according to the preceding claim, **characterized in that** the said device (1) performs at least the ISR and ROV functions.

3. Assembly according to the preceding claim, **characterized in that** the said device (1) comprises a float (36), a ball (40) and a spring (37).

4. Assembly according to any one of the preceding claims, **characterized in that** the connection parts (3, 4) extend at least partially outside the casing of the tank.

5. Assembly according to any one of the preceding claims, **characterized in that** the connection parts (3, 4) are arranged in such a way as to perform an additional function other than simply mechanically holding the two elements.

6. Assembly according to the preceding claim, **characterized in that** the connection parts define a duct (10) allowing fuel vapours to flow from one of the elements to the other.

7. Assembly according to the preceding claim, **characterized in that** the first and second connection parts each comprise a duct portion (7, 8), these portions being able to come to bear against one another at their ends.

8. Assembly according to the preceding claim, **characterized in that** at least one of the elements (1, 2) comprises a mounting plate at its upper part, this mounting plate being preferably generally flat, and **in that** the corresponding duct portion is connected to this mounting plate by a web of material (20, 54).

9. Assembly according to one of the two immediately preceding claims, **characterized in that** each duct portion (7, 8) comprises at least one stiffening rib (18, 59) extending along it.

10. Assembly according to any one of the preceding claims, **characterized in that** the first and second connection parts (3, 4) each have an assembly surface able to come into contact with the assembly surface of the other element.

11. Assembly according to any one of the preceding claims, **characterized in that** the first relief comprises a tab (11) and the second relief comprises a housing (55) in which this tab can slide.

12. Assembly according to the preceding claim, **characterized in that** the said housing (55) has a rectangular internal cross section and the tab (11) has a U-shaped cross section.

13. Assembly according to the preceding claim and Claim 7, **characterized in that** one of the elements comprises two tabs (11) arranged parallel to the duct portion (8) of that element, on each side thereof, and the other element comprises two housings (55) running parallel to the corresponding duct portion, on each side thereof.

14. Assembly according to any one of the preceding claims, **characterized in that** at least one of the elements has a surface intended for welding this element onto the casing of the tank.

15. Assembly according to the preceding claim, **characterized in that** the said surface is defined by the end of a rim (26, 75) of the corresponding element.

16. Fuel tank comprising a multi-functional assembly as defined in any one of the preceding claims.

17. Tank according to the preceding claim, **characterized in that** the casing of the tank comprises an orifice specific to each element, allowing this element to be at least partially introduced into the tank.

18. Method of manufacturing a motor vehicle fuel system comprising a fuel tank, the said method comprising the following steps :
- assembling two elements of the fuel system, particularly by welding, one of the elements consisting of a canister (2) and the other of a device (1) performing at least one of the ROV, ISR, SLV, SPD, ORVR or OBD functions, the two elements comprising connection parts allowing them to be assembled independently of the casing of the tank and without one element being built into the other,
- fixing the assembly thus obtained onto the casing of the tank, particularly by welding,
- the said method being **characterized in that**:
- one of the elements comprises at least a first relief (11) able to collaborate through complementing shapes with a second relief (55) belonging to the other element, the said reliefs being able to be assembled in a direction (Y) and at least one of the elements comprising a body of axis (X, X') perpendicular to this direction; and
- the elements are assembled in the direction (Y) using the said reliefs (11, 55) in such a way that one of the elements does not surround the other.

19. Method according to the preceding claim, **characterized in that** the assembly is introduced into the casing of the tank in a direction parallel to the axis (X, X') and therefore perpendicular to the direction of assembly (Y).

20. Method according to one of Claims 18 or 19, **characterized in that** the multi-functional assembly (5) is fixed directly onto the casing of the tank, without the intermediary of a cover.
